# EUROPEAN PATENT APPLICATION

(11) **EP 4 407 052 A1**
(43) Date of publication of application: **31.07.2024**
(21) Application number: 24150190.7
(22) Date of filing: 03.01.2024
(51) Int. Cl.: C22B 1/00, C22B 3/08, C22B 7/00, C22B 3/00, C22B 26/12, C22B 47/00

(54) **METHOD OF RECOVERING A TRANSITION METAL**

(30) Priority: 13.01.2023 KR 20230005406
(71) Applicant: SK Innovation Co., Ltd., Seoul 03188 (KR)
(72) Inventor: SHIM, Su Hyang, 34124 Daejeon (KR); PARK, Ji Yun, 34124 Daejeon (KR); YOO, Su Min, 34124 Daejeon (KR); YOON, Keum Jung, 34124 Daejeon (KR); LEE, Hyeon Hui, 34124 Daejeon (KR)
(74) Representative: Frick, Robert

(57) **Abstract**

The invention relates to a method of recovering a transition metal selected from nickel, cobalt and manganese from a raw material. Specifically, according to the method, a first raw material containing the transition metal(s) in an oxidized state and a second raw material containing the transition metal(s) in a reduced state are provided, a raw material mixture of these raw materials is prepared, and a leached liquid containing the transition metal(s) obtained from a raw material mixture.

## Description

### BACKGROUND

### 1. Field

The present invention relates to a method of recovering a transition metal selected from nickel, cobalt and manganese from a raw material.

### 2. Description of the Related Art

Nickel, cobalt and manganese are used in a variety of fields including an alloy for a magnet, a filaments, etc., a plating for anti-corrosion, a catalyst, an adhesive carbide, cathode active materials for a secondary battery, etc. Particularly, nickel, cobalt and manganese are actively used as transition metals included in active materials for a cathode of a lithium secondary battery.

As high-cost and valuable metals including nickel, cobalt and manganese are used in the cathode active material, more than 20% of a production cost is required on preparing the cathode material. Additionally, as environmental protection issues have recently been highlighted, researches on a recycling method for the cathode active material are being actively progressed.

For example, a waste cathode active material is mixed with a strong acid, an oxidizing agent is added to precipitate nickel, cobalt and manganese so that metals may be recovered in the form of nickel sulfate, cobalt sulfate and manganese sulfate.

Additionally, nickel, cobalt and manganese may be recovered from nickel-containing hydroxide precipitates originating from ores. For example, the nickel-containing hydroxide precipitate may be mixed with a strong acid, nickel may be selectively extracted, and cobalt and manganese may be recovered from a residue. A reducing agent may be input to the residue, so that cobalt and manganese may be recovered in the form of cobalt sulfate and manganese sulfate, respectively.

The recovered nickel sulfate, cobalt sulfate and manganese sulfate may be used to produce a cathode active material again.

However, the recovery process for nickel, cobalt, manganese, etc., may require many process steps and an oxidizing or reducing agent is used to improve a recovery ratio, which may increase a recovery cost.

### SUMMARY

The invention aims to provide a method of recovering a transition metal providing improved efficiency and recover ratio.

Against this background, the invention proposes a method of recovering a transition metal selected from at least one of nickel, cobalt and manganese from a raw material containing the transition metal, the method comprising: preparing a first raw material containing the transition metal(s) in an oxidized state; preparing a second raw material containing the transition metal(s) in a reduced state; mixing the first and second raw materials to provide a raw material mixture; contacting the raw material mixture with a solvent in a leaching step to obtain a leached liquid; and isolating the transition metal from the leached liquid.

In some embodiments, the first raw material is a residue that is obtained by selectively leaching nickel from a nickel-containing mixed hydroxide precipitate (MHP).

In some embodiments, nickel is leached from the nickel-containing MHP by using an oxidizing agent that has an extraction selectivity for nickel.

In some embodiments, a sulfuric acid solution is supplied to the nickel-containing MHP together with the oxidizing agent to selectively leach nickel. The residue after selectively leaching nickel from the nickel-containing MHP is used as the first raw material.

In some embodiments, the second raw material is a reduced cathode active material that is obtained by reducing a cathode active material.

In some embodiments, the reducing comprises pulverizing the lithium secondary battery and reacting the cathode active material with a carbon-based material in an inert gas atmosphere to obtain lithium oxide and the reduced cathode active material.

In some embodiments, the solvent used in the leaching step is a sulfuric acid solution.

In some embodiments, the sulfuric acid solution has a sulfuric acid concentration in a range from 0.5M to 1.5M.

In some embodiments, the leached liquid is performed under a condition of pH of 2.5 or less using the sulfuric acid solution.

In some embodiments, a weight ratio of the sulfuric acid solution relative to a total weight of the raw material mixture in the leaching step (solvent : raw material mixture) is in a range from 3:1 to 7:1.

In some embodiments, the solvent used in the leaching step does not comprise an oxidizing agent other than sulfuric acid solution.

In some embodiments, the solvent used in the leaching step does not comprise a reducing agent.

In some embodiments, isolating the transition metal(s) from the leached liquid comprises extracting the transition metal(s) from the leached liquid.

In some embodiments, the transition metal(s) are extracted in the form of nickel sulfate, cobalt sulfate and/or manganese sulfate, respectively.

In some embodiments, nickel sulfate, cobalt sulfate and/or manganese sulfate may be extracted using at least one of a phosphoric acid-based extractant and a carboxylic acid-based extractant.

According to the present invention, a first raw material containing an oxidized transition metal and a second raw material containing a reduced transition metal are mixed to precipitate nickel, cobalt and manganese. The first raw material is used as an oxidizing agent for the second raw material, and the second raw material is used as a reducing agent for the first raw material. Accordingly, nickel, cobalt and manganese may be precipitated even when an additional oxidizing agent or reducing agent is not added.

In some embodiments, nickel cobalt and manganese may be precipitated in a sulfuric acid solution. Accordingly, nickel, cobalt, and manganese may be precipitated in the form of metal salts containing nickel, cobalt and manganese, respectively. Additionally, a pH may be maintained low during the leaching by the sulfuric acid solution. Therefore, an oxidation reaction rate of nickel, cobalt, and manganese may be greater, and a leaching ratio may be improved.

### BRIEF DESCRIPTION OF THE DRAWINGS

FIGS. 1 and 2 are schematic flow diagrams illustrating a method of recovering a transition metal in accordance with example embodiments.
FIG. 3 is a schematic flow diagram illustrating a method of recovering a transition metal in accordance with a comparative example.

### DETAILED DESCRIPTION OF THE EMBODIMENTS

Hereinafter, embodiments of the present invention will be described in detail with reference to exemplary embodiments and examples, and the accompanying drawings.

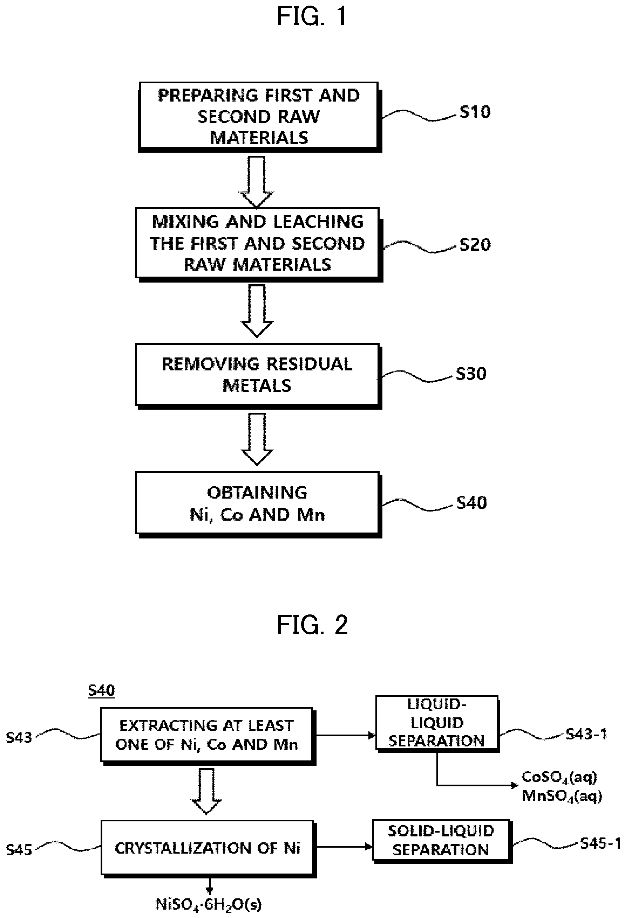

FIGS. 1 and 2 are schematic flow diagrams illustrating a method of recovering a transition metal in accordance with example embodiments.

The present invention relates to a method for recovering at least one of nickel, cobalt and manganese from a raw material containing at least one of nickel, cobalt and manganese.

Referring to FIGS. 1 and 2, a first raw material and a second raw material may be prepared (e.g., in a process S10).

In example embodiments, the first raw material may include an oxidized transition metal. For example, the first raw material may include at least one of an oxidized nickel, an oxidized cobalt and an oxidized manganese.

In some embodiments, the first raw material may be a raw material prepared from a nickel-containing mixed hydroxide precipitate (MHP) derived from an ore. More specifically, the nickel-containing MHP may be an intermediate product of nickel laterite ore processing through the hydrometallurgical route. The nickel-containing MHP may include at least one of nickel (Ni), cobalt (Co) and manganese (Mn). In one embodiment, the nickel-containing MHP may further contain an additional metal such as iron (Fe), aluminum (Al), copper (Cu), sodium (Na), zinc (Zn), calcium (Ca) in addition to nickel, cobalt and manganese.

In some embodiments, nickel may be leached from the nickel-containing MHP using an oxidizing agent that has an extraction selectivity for nickel. The oxidizing agent may include metal persulfate. For example, the oxidizing agent may include sodium persulfate (Na₂S₂O₈). A sulfuric acid solution may be supplied to the nickel-containing MHP together with the oxidizing agent to selectively leach nickel.

In one embodiment, a residue after selectively leaching nickel from the nickel-containing MHP can be used as the first raw material. The residue may exist in the form of transition metals (e.g., nickel, cobalt, manganese, etc.) oxidized by sulfuric acid and the oxidizing agent.

The oxidized transition metals obtained as described above may be prepared as the first raw material.

In example embodiments, the second raw material may include a reduced transition metal. For example, the second raw material may include at least one of reduced nickel, reduced cobalt and reduced manganese.

In some embodiments, the second raw material may be a raw material prepared from a cathode active material collected by pulverizing a cathode recovered from a lithium secondary battery. The cathode may be obtained from, e.g., a used lithium secondary battery, or may be a cathode that has been damaged or defective during a manufacturing process of a lithium secondary battery.

The cathode active material may include a compound having a composition represented by Chemical Formula 1 below.

[Chemical Formula 1] LiₓNi_{1-y}M_{y}O_{2+z}

In Chemical Formula 1, 0.9≤x≤1.1, 0≤y≤0.7, -0.1≤z≤0.1, and M may include at least one selected from Na, Mg, Ca, Y, Ti, Zr, Hf, V, Nb, Ta. , Cr, Mo, W, Mn, Co, Fe, Cu, Ag, Zn, B, Al, Ga, C, Si, Sn and Zr.

In some embodiments, the cathode active material may include an NCM-based lithium oxide containing nickel, cobalt and manganese.

In one embodiment, lithium (Li) may be removed from the cathode active material in the form of lithium oxide, and a reduced transition metal may be obtained. For example, the cathode active material may be reacted with a carbon-based material, such as a hydrocarbon. in an inert gas atmosphere to obtain lithium oxide and the reduced transition metal.

The reduced transition metals obtained as described above may be prepared as the second raw material.

In example embodiments, the first raw material and the second raw material may be mixed to form a raw material mixture, and at least one of nickel, cobalt and manganese may be leached or precipitated from the raw material mixture to obtain a leached liquid (e.g., S20 process).

In some embodiments, a content of the first raw material and a content of the second raw material in the raw material mixture may be adjusted according to a degree of oxidation of the first raw material and a degree of reduction of the second raw material.

For example, if the degree of oxidation of the first raw material is high, the content of the first raw material may be less than the content of the second raw material. For example, if the degree of reduction of the second raw material is high, the content of the second raw material may be less than the content of the first raw material.

In some embodiments, nickel, cobalt and manganese may be leached in the form of metal salts. For example, nickel, cobalt and manganese may be leached in the form of nickel sulfate (NiSO₄), cobalt sulfate (CoSO₄) and manganese sulfate (MnSO₄), respectively.

In some embodiments, a sulfuric acid solution may be injected to the raw material mixture to implement the leaching. Sulfuric acid is a strong acid, and nickel, cobalt, and manganese have high solubility in sulfuric acid. Accordingly, nickel, cobalt and manganese may be leached by the sulfuric acid solution.

In one embodiment, a concentration of the sulfuric acid solution may be in a range from 0.5M to 1.5M, or from 0.8M to 1.2M. Within the above range, a rapid pH change caused by sulfuric acid may be suppressed when mixing the raw material mixture and the sulfuric acid solution.

In some embodiments, a weight ratio of the sulfuric acid solution relative to a total weight of the raw material mixture may be in a range from 3 to 7, or from 3.5 to 6.5. Within this range, a sufficient amount of sulfuric acid may be provided for the leaching of nickel, cobalt and manganese while reducing a wasted amount of sulfuric acid.

In one embodiment, a weight ratio of the sulfuric acid solution to the total weight of the raw material mixture may be in a range from 5.95 to 6.5. Within this range, the transition metals may not be saturated with respect to sulfuric acid solution. Accordingly, a leaching ratio of nickel, cobalt and manganese may be enhanced.

In some embodiments, nickel, cobalt and manganese in the raw material mixture may be leached at a pH condition of 2.5 or less, from 0 to 2.5, or from 0 to 2. For example, pH may be adjusted through a content ratio of the first raw material and the second raw material and/or a content of the sulfuric acid solution. Within this range, a leaching reaction of nickel, cobalt and manganese (e.g., a formation reaction of nickel, cobalt and manganese with sulfuric acid) may be efficiently induced.

In some embodiments, the selective leaching reaction of nickel, cobalt and manganese may be performed without using an additional oxidizing agent or an additional reducing agent other than the sulfuric acid solution.

When the first or second raw material would be leached independently, an oxidizing agent or a reducing agent would need to be added in an appropriate equivalent ratio to convert the transition metal in the first or second raw material into a divalent ion. Therefore, when the first raw material or the second raw material would be leached independently, an oxidizing agent or reducing agent would need to be added to improve a yield of the transition metals.

However, according to the present invention, the first raw material and the second raw material are leached in a state of being mixed. The first raw material serves as an oxidizing agent for the second raw material, and the second raw material serves as a reducing agent for the first raw material.

Accordingly, even though the oxidizing agent and reducing agent are not added, the transition metals of the first and second raw materials may be converted into the form of divalent ions. Thus, a cost of obtaining nickel, cobalt and manganese may be reduced, and nickel, cobalt and manganese may be obtained in an eco-friendly process without using the oxidizing agent or the reducing agent.

The leaching of nickel, cobalt and manganese may be performed, e.g., at a temperature in a range from 60°C to 100°C, or from 70°C to 90°C. Within the above range, the leaching ratio of nickel, cobalt and manganese may be improved.

In some embodiments, residual metals may be additionally separated and removed from the leached liquid in which nickel cobalt, and manganese are leached (e.g., S30 process). For example, the leached liquid may contain the residual metals such as iron, aluminum, copper and zinc. In this case, the residual metals contained in the leached liquid may be additionally separated and removed.

In one embodiment, the residual metals contained in the leached liquid may be at least partially removed by a liquid-liquid separation.

For example, the liquid-liquid separation may be performed by a mixed sedimentation or a centrifugal extraction. Through the liquid-liquid separation, an amount of the residual metals may be reduced or removed from the leached liquid.

In example embodiments, nickel, cobalt and manganese may be obtained from the leached liquid (e.g., S40 process).

In some embodiments, nickel, cobalt and manganese may be obtained by an extraction in the form of nickel sulfate, cobalt sulfate and manganese sulfate, respectively. For example, nickel sulfate, cobalt sulfate and manganese sulfate may be obtained in the form of nickel sulfate hydrate (e.g., NiSO₄·6H₂O), cobalt sulfate hydrate (e.g., CoSO₄·7H₂O) and manganese sulfate hydrate (e.g., MnSO4·H₂O), respectively.

In one embodiment, a phosphoric acid-based extractant or a carboxylic acid-based extractant may be input to the leached liquid so that cobalt and manganese may be extracted in the form of cobalt sulfate and manganese sulfate, respectively.

For example, cobalt may be extracted from the leached liquid using the phosphoric acid-based extractant or the carboxylic acid-based extractant. For example, the extractant may be added together with an alkaline compound to extract cobalt sulfate from the leached liquid. The extracted cobalt sulfate may be separated into an aqueous cobalt sulfate solution through a liquid-liquid separation (e.g., process S43-1).

The liquid-liquid separation may be performed by a mixed sedimentation or a centrifugal extraction. The aqueous cobalt sulfate solution may be obtained as cobalt sulfate hydrate by a vacuum evaporation, a centrifugal dehydration, a drying, etc.

For example, manganese may be extracted from the leached liquid using the phosphoric acid-based extractant or the carboxylic acid-based extractant. For example, the extractant may be added together with an alkaline compound to extract manganese sulfate from the leached liquid. The extracted manganese sulfate may be separated into an aqueous manganese sulfate solution by a liquid-liquid separation (e.g., process S43-1).

The liquid-liquid separation may be performed by a mixed sedimentation or a centrifugal extraction. The aqueous manganese sulfate solution may be obtained as manganese sulfate hydrate by a vacuum evaporation, a centrifugal dehydration, a drying, etc.

In some embodiments, nickel may be extracted from the leached liquid. In one embodiment, nickel may be extracted from a remaining leached liquid after cobalt and manganese contained in the leached liquid are extracted. For example, a residue liquid after cobalt and manganese are extracted from the leached liquid may be an aqueous nickel solution.

In some embodiments, nickel sulfate hydrate may be obtained by concentrating process and/or crystallizing the aqueous nickel solution (e.g., process S45-1).

For example, water in the aqueous nickel solution may be partially evaporated, concentrated, and then cooled to allow nickel sulfate in the aqueous nickel solution to crystallize and precipitate in the form of nickel sulfate hydrate. The precipitated nickel sulfate hydrate may be separated by a solid-liquid separation. The solid-liquid separation may be performed using a filter press or a centrifugal separator.

In one embodiment, the aqueous nickel solution may contain a residual metal such as sodium. The residual metal may be separated by the solid-liquid separation of the nickel sulfate hydrate while maintaining the residual metal.

Through the solid-liquid separation, crystallized nickel sulfate hydrate may be obtained from the leached liquid.

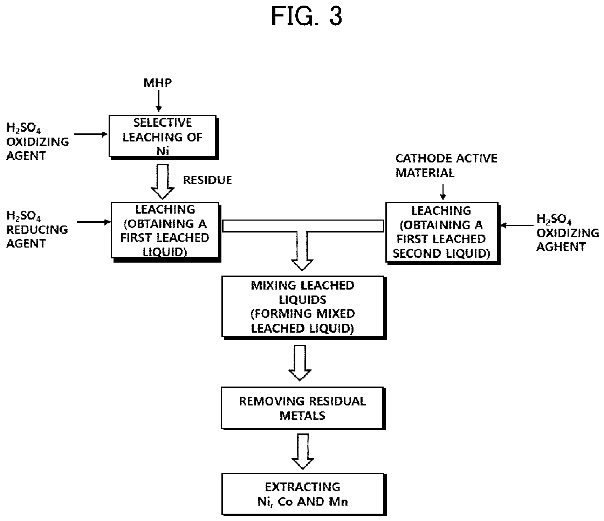

FIG. 3 is a schematic flow diagram illustrating a method of recovering a transition metal in accordance with a comparative example. The comparative example described below with reference to FIG. 3 is provided to describe effects of the process concept of FIG. 1 in more detail.

Referring to FIG. 3, transition metals may be leached from a nickel-containing MHP and a cathode active material, respectively.

Nickel may be leached from the nickel-containing MHP using an oxidizing agent having a extraction selectivity for nickel. The oxidizing agent may include metal persulfate. For example, the oxidizing agent may include sodium persulfate (Na₂S₂O₈). A sulfuric acid solution may be supplied to the nickel-containing MHP together with the oxidizing agent to selectively leach nickel.

A residue after nickel is selectively leached from the nickel-containing MHP may be leached. The residue may exist in the form of transition metals (e.g., nickel, cobalt, manganese, etc.) oxidized by sulfuric acid and the oxidizing agent.

The first leached liquid may be obtained by adding a reducing agent to the residue. For example, the reducing agent may include hydrogen peroxide (H₂O₂). A sulfuric acid solution may be supplied to the residue together with the reducing agent to leach nickel, cobalt and manganese in the form of nickel sulfate, cobalt sulfate and manganese sulfate, respectively.

The cathode active material may be collected by grinding a cathode recovered from a lithium secondary battery. The cathode may be, e.g., a cathode from a used waste lithium secondary battery or a cathode that may be damaged or defective in a manufacturing process.

The cathode active material may be an NCM-based lithium oxide containing nickel, cobalt, and manganese. The cathode active material may include nickel, cobalt and manganese, and may further include sodium, magnesium, calcium, copper, aluminum, etc.

Lithium (Li) may be removed from the cathode active material in the form of lithium oxide. For example, the cathode active material may be reacted with a carbon-based material in an inert gas atmosphere to obtain lithium oxide and a reduced transition metal.

A second leached liquid may be obtained by adding an oxidizing agent to the reduced transition metal. For example, the oxidizing agent may include hydrogen peroxide (H₂O₂). A sulfuric acid solution may be supplied to the reduced transition metal together with the oxidizing agent to leach nickel, cobalt and manganese in the form of nickel sulfate, cobalt sulfate, and manganese sulfate, respectively.

The first leachate and the second leachate may be mixed to form a mixed leached liquid. The mixed leached liquid may include nickel sulfate, cobalt sulfate and manganese sulfate. The mixed leached liquid may further contain residual metals.

The residual metals contained in the mixed leached liquid may be at least partially removed by a liquid-liquid separation. The liquid-liquid separation may be performed by a mixed sedimentation or a centrifugal extraction. Through the liquid-liquid separation, the mixed leached liquid in which an amount of the residual metals is reduced or removed may be obtained.

An extractant may be added to the mixed leached liquid to extract cobalt sulfate and manganese sulfate. For example, the extractant may include a phosphoric acid-based extractant.

Nickel may be extracted from a residual mixed leached liquid obtained by extracting cobalt sulfate and manganese sulfate from the mixed leached liquid. For example, an extractant may be added to the residual mixed leached liquid to extract nickel sulfate. For example, the extractant may include a phosphoric acid-based extractant.

Nickel sulfate may be obtained in the form of nickel sulfate hydrate by partially concentrating and crystallizing nickel sulfate extracted from the residual mixed leached liquid from which cobalt sulfate and manganese sulfate are extracted.

According to the above-described comparative example, the reducing agent and the oxidizing agent are used to leach transition metals from the nickel-containing MHP and the cathode active material. Further, the process for leaching transition metals from the nickel-containing MHP and the cathode active material are carried out separately, so a plurality of the leaching processes are independently performed. Accordingly, a process cost may be increased, and environmental pollution may be caused by a waste reducing agent and a waste oxidizing agents.

However, according to embodiments described with reference to FIGS. 1 and 2, the leaching process may be unified into a process of leaching transition metals from the nickel-containing MHP and the cathode active material. Additionally, separate reducing agent and oxidizing agent may not be used in the leaching process. Thus, the process cost may be reduced, and an eco-friendly leaching process may be performed because the waste reducing agent and the waste oxidizing agent may not be generated.

Hereinafter, embodiments of the present invention are described in more detail with reference to experimental examples.

### Examples and Comparative Examples

### Example 1

After selectively leaching nickel from a nickel-containing MHP, a residue containing nickel, cobalt and manganese was prepared as a first raw material. A waste cathode was pulverized and reduced to prepare a cathode active material containing nickel, cobalt and manganese as a second raw material. The first and second raw materials were mixed, a 1M sulfuric acid solution was added and the leaching was performed for 2 hours at 80°C to obtain a leached liquid in which nickel, cobalt and manganese were leached.

Metal concentrations in the first and second raw materials are shown in Table 1 and 2 below. Amounts of the first raw material, the second raw material and the sulfuric acid solution, and a sulfuric acid margin are shown in Table 3 below.

### Examples 2 to 4

Leached liquids of Examples 2 to 4 were obtained by the same method as that in Example 1, except that the amounts of the first raw material, the second raw material and the sulfuric acid solution, and the sulfuric acid margin were adjusted as shown in Table 3 below.

### Comparative Example 1

After selectively leaching nickel from the nickel-containing MHP, a residue containing nickel, cobalt and manganese was prepared as a first raw material. A 2M sulfuric acid solution was added to the first raw material to perform leaching for 2 hours at 80°C to obtain a leached liquid.

Metal concentrations in the first raw material are shown in Table 1 below.

Amounts of the first raw material and the sulfuric acid solution, and a sulfuric acid margin are shown in Table 3 below.

### Comparative Example 2

A leched liquid of Comparative Example 2 was prepared by the same method as that in Comparative Example 1, except that 5.48 g of 35 wt% hydrogen peroxide was added to the first raw material together with a 1 M sulfuric acid, and the amounts of the sulfuric acid solution and the sulfuric acid margin were adjusted as shown in Table 3 below.

### Comparative Example 3

A waste cathode was pulverized and reduced to prepare a cathode active material containing nickel, cobalt and manganese as a second raw material. A 2M sulfuric acid solution was added to the second raw material to perform leaching for 2 hours at 80°C to obtain a leached liquid.

Metal concentrations in the second raw material are shown in Table 2 below.

Amounts of the second raw material and the sulfuric acid solution, and a sulfuric acid margin are shown in Table 3 below.

### Comparative Example 4

A leched liquid of Comparative Example 4 was prepared by the same method as that in Comparative Example 3, except that 7.62 g of 35 wt% hydrogen peroxide was added to the second raw material together with a 2M sulfuric acid, and the amount of the sulfuric acid solution and a sulfuric acid margin were adjusted as shown in Table 3 below.

**[Table 1]**

| | Ni | Co | Mn | Fe | Al | Cu | Na |
|---|---|---|---|---|---|---|---|
| content (wt%) | 23.8 | 3.0 | 4.2 | 1.4 | 0.23 | 0.09 | 0.69 |

**[Table 2]**

| | Li | Ni | Co | Mn | Fe | Al | Cu |
|---|---|---|---|---|---|---|---|
| content (wt%) | 0.36 | 16.8 | 4.3 | 4.8 | 0.01 | 0.97 | 0.26 |

**[Table 3]**

| | amount of first raw material (g) | amount of second raw material (g) | sulfuric acid margin (mol-H₂SO₄/mol-Li/Ni/Co/Mn/Mg/Zn/Ca/Al/Fe) | amount of sulfuric acid solution (g) |
|---|---|---|---|---|
| Example 1 | 15 | 15 | 0.98 | 178.0 |
| Example 2 | 18 | 12 | 0.98 | 180.0 |
| Example 3 | 18 | 12 | 0.73 | 125.0 |
| Example 4 | 22 | 8 | 0.73 | 113.0 |
| Comparative Example 1 | 30 | - | 0.99 | 99.0 |
| Comparative Example 2 | 30 | - | 0.50 | 90.0 |
| Comparative Example 3 | - | 30 | 1.13 | 111.2 |
| Comparative Example 4 | - | 30 | 1.13 | 111.2 |

### Experimental Example 1

### (1) Measurement of leaching ratio of nickel, cobalt and manganese and pH in leached solution

Leaching ratios were measured by calculating weights of nickel, cobalt and manganese in the leached liquid as a weight percent for each metal relative to weights of nickel, cobalt and manganese in the first and second raw materials.

Additionally, a pH in the leached liquid was measured using a pH meter.

The measurement results are listed in Table 4 below.

**[Table 4]**

| | leaching ration of Ni, Co and Mn (wt%) | | | pH |
|---|---|---|---|---|
| | Ni | Co | Mn | |
| Example 1 | 85 | 83 | 99 | 0.9 |
| Example 2 | 93 | 91 | 100 | 0.75 |
| Example 3 | 85 | 85 | 98 | 2.4 |
| Example 4 | 93 | 89 | 77 | 1.7 |
| Comparative Example 1 | 81 | 75 | 0 | 0.06 |
| Comparative Example 2 | 94 | 98 | 77 | 1.08 |
| Comparative Example 3 | 70 | 71 | 95 | 0.55 |
| Comparative Example 4 | 86 | 88 | 96 | 1.4 |

Referring to Table 4, in Examples where nickel, cobalt and manganese were leached after mixing the first raw material containing oxidized transition metals and the second raw material containing reduced transition metals, the nickel leaching ratio was 85wt% or more, the cobalt leaching ratio was 83% or more, and the manganese leaching ratio was 77% or more without using an oxidizing agent or a reducing agent.

In Example 2 where a weight ratio of the sulfuric acid solution relative to the total weight of the first raw material and the second raw material was in a range from 5.95 to 6.5, the leaching ratios of nickel, cobalt and manganese were all increased.

In Example 4 where the weight ratio of the sulfuric acid solution relative to the total weight of the first raw material and the second raw material was less than 4, the leaching ratios of nickel and cobalt were increased, but the leaching ratio of manganese was relatively decreased.

In Comparative Example 1, in which the first and second raw materials were not mixed and leached without a reducing agent, the leaching rates of nickel and cobalt were reduced, and manganese was not leached.

In Comparative Example 2 where the first and second raw materials were not mixed but the reducing agent was added, the leaching ratios of nickel and cobalt were increased, but the leaching ratio of manganese decreased.

In Comparative Example 3 where the first and second raw materials were leached without mixing and without using the oxidizing agent, the leaching ratios of nickel, cobalt and manganese were decreased.

## Claims

1. A method of recovering a transition metal selected from at least one of nickel, cobalt and manganese from a raw material containing the transition metal(s), the method comprising:
preparing a first raw material containing the transition metal(s) in an oxidized state;
preparing a second raw material containing the transition metal(s) in a reduced state;
mixing the first and second raw materials to provide a raw material mixture;
contacting the raw material mixture with a solvent in a leaching step to obtain a leached liquid; and
isolating the transition metal(s) from the leached liquid.

2. The method of claim 1, wherein the first raw material is a residue that is obtained by selectively leaching nickel from a nickel-containing mixed hydroxide precipitate.

3. The method of claim 2, wherein nickel is leached from the nickel-containing mixed hydroxide precipitate by using an oxidizing agent that has an extraction selectivity for nickel.

4. The method of claim 3, wherein a sulfuric acid solution is supplied to the nickel-containing mixed hydroxide precipitate together with the oxidizing agent to selectively leach nickel, and wherein the residue after selectively leaching nickel from the nickel-containing mixed hydroxide precipitate is used as the first raw material

5. The method of any preceding claim, wherein the second raw material is a reduced cathode active material that is obtained by reducing a cathode active material.

6. The method of claim 5, wherein the reducing comprises pulverizing the lithium secondary battery and reacting the cathode active material with a carbon-based material in an inert gas atmosphere to obtain lithium oxide and the reduced cathode active material.

7. The method of any preceding claim, wherein the solvent used in the leaching step is a sulfuric acid solution.

8. The method of claim 7, wherein the sulfuric acid solution has a sulfuric acid concentration in a range from 0.5M to 1.5M.

9. The method of claim 7 or 8, wherein obtaining the leached liquid is performed under a condition of pH 2.5 or less using the sulfuric acid solution.

10. The method of any one of claims 7 to 9, wherein a weight ratio of the sulfuric acid solution relative to a total weight of the raw material mixture in the leaching step (solvent : raw material mixture) is in a range from 3:1 to 7:1.

11. The method of any one of claims 7 to 10, wherein the solvent used in the leaching step does not comprise an oxidizing agent other than sulfuric acid solution.

12. The method of any preceding claim, wherein the solvent used in the leaching step does not comprise a reducing agent.

13. The method of any preceding claim, wherein isolating the transition metal(s) from the leached liquid comprises extracting the transition metal(s) from the leached liquid.

14. The method of claim 13, wherein the transition metal(s) are extracted in the form of nickel sulfate, cobalt sulfate and/or manganese sulfate, respectively.

15. The method of claim 13 or 14, wherein nickel sulfate, cobalt sulfate and/or manganese sulfate are extracted using at least one of a phosphoric acid-based extractant and a carboxylic acid-based extractant.
